# EUROPEAN PATENT SPECIFICATION

(11) **EP 3 497 067 B1**
(45) Date of publication and mention of the grant of the patent: **06.01.2021**
(21) Application number: 17851888.2
(22) Date of filing: 19.07.2017
(51) Int. Cl.: C03C 17/00, A47G 19/22, B44C 5/00, C03C 17/32, G09F 23/04, G09F 23/08

(54) **METHOD OF INSERTING AN OBJECT INTO GLASS**
VERFAHREN ZUM EINFÜGEN EINES OBJEKTES IN GLAS
PROCÉDÉ D'INSERTION D'UN OBJET DANS DU VERRE

(30) Priority: 08.08.2016 TR 201611095
(43) Date of publication of application: 19.06.2019
(73) Proprietor: Türkiye Sise Ve Cam Fabrikalari A.S., 34330 Istanbul (TR)
(72) Inventor: ERDEM, Osman Haluk, 34330 Istanbul (TR); SOYKUT, Ali Yüksel, 34330 Istanbul (TR)
(74) Representative: Kaya, Erdem
(86) International application number: PCT/TR2017/050325
(87) International publication number: WO 2018/056941

(56) References cited:
- WO-A2-2011/112836
- FR-A1- 2 285 976
- FR-A1- 2 807 970
- US-B1- 6 368 531

## Description

### Field of the Invention

The present invention relates to methods of inserting an object into glass as described in the appended claims.

### Background of the Invention (Prior Art)

Glass has been used both in ornaments and in household goods since the ancient times. Today, it still has a wide area of use, ranging from simple tools to space technologies.

The present invention relates to a method of inserting an object into glass for advertisement, promotion, or decorative purposes. Said glassware comprising an object may be any glass product used in houses, restaurants, and cafes, or may be glass packaging products.

In the state of the art, the bottom of some beer glasses sold/given as souvenirs is provided with an LED light. When such beer glasses are held by hand, the circuit is switched and the LED light is on, causing astonishment in the user.

Said LED light is attached to the bottom of the beer glass using an adhesive. However, this beer glass is not dishwasher-safe. In case said beer glass is put in the dishwasher, the adhesive loses its adhesive property, and so the LED light is separated from the beer glass making it unusable.

The Patent Application Numbered US2014185019 (A1) is an exemplary prior art document. This invention particularly relates to a logo or advertisement projection system for the glassware. There exists an illuminated surface for displaying the logo or advertisement. Unlike traditional advertisement printed on a glass, the advertisement is not permanent and can be switched.

Another prior art document within this context is the Utility Model Application Numbered CN202222925 U. This utility model relates to designing a glass comprising a billboard. In this glass, a groove is arranged on a glass body. Optionally, the billboards may be inserted on the glass by means of inserting rods.

The U.S. Patent Application Numbered US 20150210584 A1 is another exemplary prior art document. In this patent document, when the glass is hot (about 1000-1100°C), ceramic objects that are heated up to 1000°C are inserted thereinto. However, there are few materials that may endure such high temperatures. It is likely that an internal stress is formed in case of a thermal expansion difference between the glass and the material desired to be inserted into the glass. Document FR2285976-A1 discloses a method of inserting an object into glass, comprising the steps of forming a space in the glass during the production of said glassware, adding a filler resin made of epoxy or urethane into the space formed in the glassware; positioning the object in the filler having been filled into the space formed in the glassware. Document US6368531-B1 discloses a method of inserting an object into glass by forming a space and using a filler.

Under normal conditions, it is not possible to incorporate non-glass materials into the glass during the manufacture of glass household goods or glass packages. Said process can only be performed when the glass is in molten state. At temperatures at which the glass is in molten state, few materials can maintain their integrity. There only exist some applications in which some ceramic materials are placed into the hot glass. Nevertheless, in such cases the difference in the thermal expansion between the glass material and the placed material causes tension, and thus may cause breaks.

### Summary and Objects of the Invention

It is aimed by the present invention by developing a method of inserting an object into glass for advertisement, promotion, or decorative purposes to:
- comprise an object for advertisement, promotion, or decorative purposes;
- prevent the object from easily separating from the glassware while the latter is being washed in the dishwasher,
- to advertise or promote the desired product thanks to the object positioned at the bottom, side surface etc. of the glassware, and
- to attract the attention of the people using the glassware.

### Description of the Drawings

The drawings and related descriptions for a better understanding of the method of inserting an object into glass for advertisement, promotion, or decorative purposes having been developed according to the invention are given below.

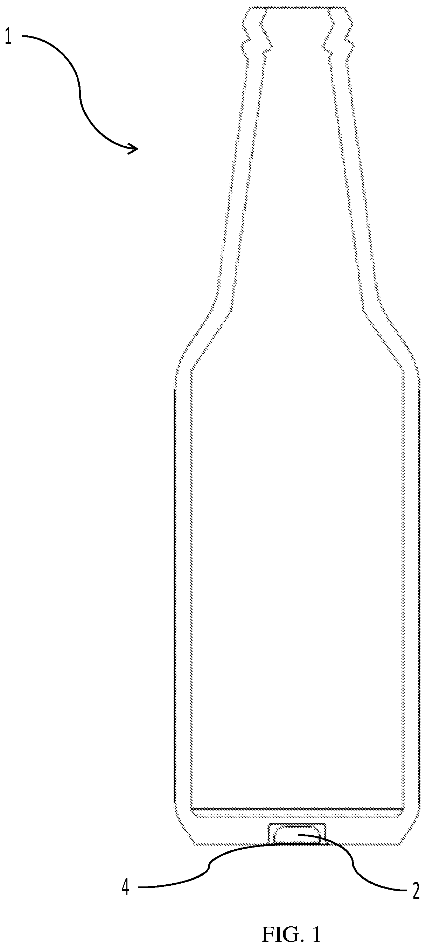

Figure 1: A view of the glassware (a bottle) in which the object for advertisement, promotion, or decorative purposes is used at the bottom.

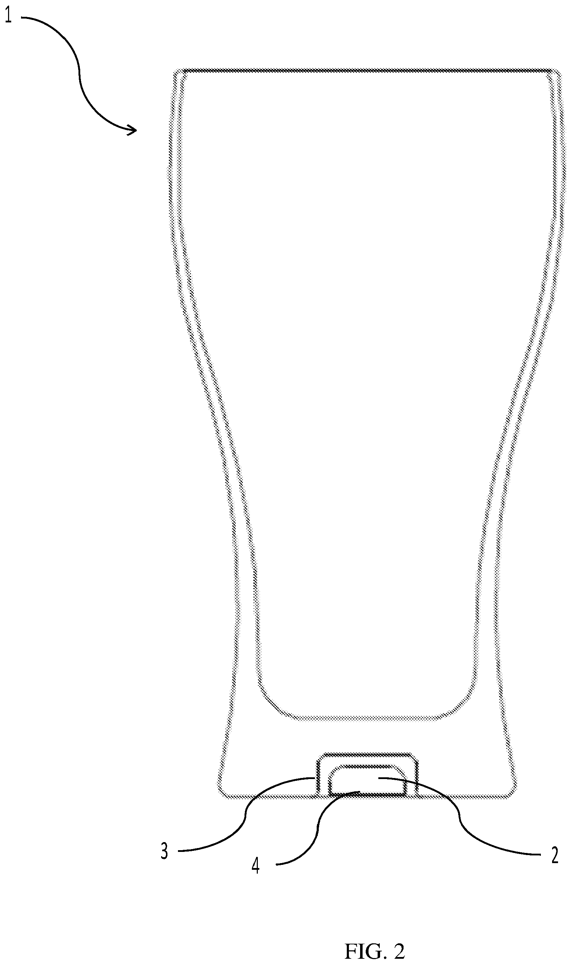

Figure 2: A view of the glassware (a glass) in which the object for advertisement, promotion, or decorative purposes is used at the bottom.

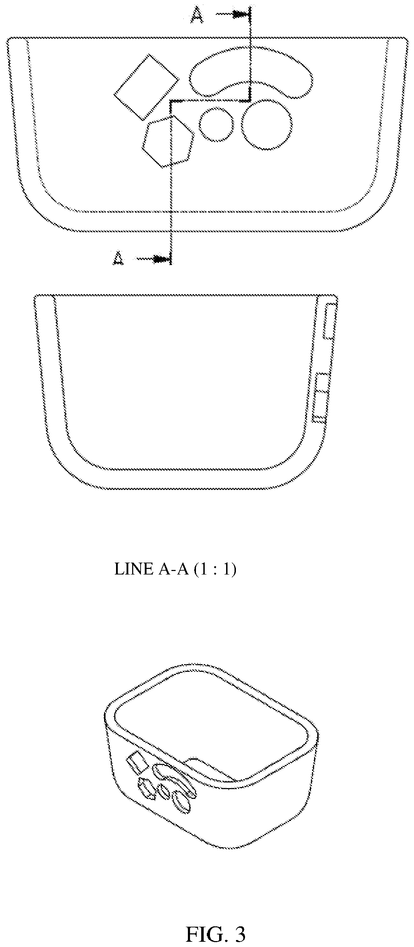

Figure 3: Cross-sectional and perspective views of the object for advertisement, promotion, or decorative purposes when used at the side surface of the glassware.

### Description of the Part References

1. Glassware
2. Object
3. Space
4. Filler

### Detailed Description of the Invention

With the present invention battery operated or battery-free light sources being caps, logos, objects, chips and the like belonging to the companies may be inserted into the bottom of the glassware (plates, glasses, storage boxes, vases, water jugs, etc.), or of the glass packages, as though they were a part of the glass.

The objects that may be utilized in the method of inserting an object into glass are battery-operated or battery-free light sources.

The method of inserting an object into glass comprises the process steps of:
- Forming a space at the bottom portion or side surface of the glassware during the production of said glassware,
- Putting the materials A and B into two different chambers disposed in the dosing system in liquid state,
- Mixing the materials A and B within the dosing system,
- Obtaining the filler as a result of this mixing process,
- Filling a certain amount of filler into the space arranged at the bottom portion of the glassware depending on the level at which the object is to be positioned,
- Positioning the object of preference on the certain amount of filler having been filled into the space disposed at the bottom portion or side surface of the glassware,
- Once the object is positioned, filling the space with the filler completely, and
- In case the filler is epoxy, oven drying the object-inserted glassware.

The two-component polyurethane material (filler) used in the present invention is obtained from the materials A and B. The material A consists of a mixture of polyol and additives. The material B, on the other hand, is made up of isocyanate.

The materials A and B are stored in liquid state in two separate chambers in the dosing system and they are mixed in an area close to the injection point by means of the dosing system.
Once the mixture is obtained, the exothermic reaction is initiated and the temperature reaches up to 130°C. As the reaction rate increases, the amount of heat produced in unit time also increases, and thus the temperature tends to get higher as well.

The temperature resulting from mixing the materials A and B is dependent on:
- The ambient temperature,
- The temperature of the glassware, and
- The amount of the materials A and B.

The aforementioned parameters may be varied in order that the curing can be completed at the desired rates, or that the object to be inserted into the glass will not be affected by the resulting temperature.

An inhibitory agent is added into the mixture of the materials A and B in order to slow down the reaction so that the object to be inserted into the glass will not be subject to the temperature produced as a result of mixing the materials A and B, and thus will not be deformed.

The obtained mixture is filled into the space provided in the glass through the injection point.

A chemical adhesive can be applied to the glass surface in order to increase the attachment of the filler (polyurethane) to the glass so that the dishwasher resistance of the object-inserted glassware will be enhanced.

In another embodiment of the invention, epoxy is used instead of polyurethane. In case epoxy is used, epoxy resin and hardening agent are mixed and filled into the space in the glass, and then the glassware is oven dried.

The filler may be transparent, or alternatively fillers of different colors may be obtained by mixing pigments into the filler.

## Claims

1. A method of inserting an object into glass, comprising steps of
• forming a space in the glassware during the production of said glassware,
• pouring polyol and isocyanate into two different chambers disposed in the dosing system in liquid state,
• mixing polyol and isocyanate, thereby obtaining the filler,
• adding filler into the space formed in the glassware depending on the level at which the object is to be positioned,
• positioning the object on the filler having been filled into the space formed in the glassware, and
• once the object is positioned, filling the space with the filler completely.
**characterized in that**
the object is a battery-operated or battery-free light source.

2. The method of inserting an object into glass according to Claim 1, **characterized in that** an inhibitory agent is added into the mixture in order to slow down the reaction so that the object will not be subject to the temperature produced as a result of mixing polyol and isocyanate, and thus will not be deformed.

3. The method of inserting an object into glass according to Claim 1, **characterized in that** chemical adhesive is applied to the glass surface in order to increase the attachment of the filler to the glass so that the dishwasher resistance of the glassware will be enhanced.

4. The method of inserting an object into glass according to Claim 1, **characterized in that** pigments are added in order to color the filler.

5. A method of inserting an object into glass, **comprising** steps of
• forming a space in the glassware during the production of said glassware,
• putting epoxy resin and hardening agent into two different chambers disposed in the dosing system in liquid state,
• mixing epoxy resin and hardening agent, thereby obtaining the filler,
• adding filler into the space formed in the glassware depending on the level at which the object is to be positioned,
• positioning the object on the filler having been filled into the space formed in the glassware,
• once the object is positioned, filling the space with the filler completely, and
• oven drying the object-inserted glassware
**characterized in that**
the object is a battery-operated or battery-free light source.

## Patentansprüche

1. Verfahren zum Einfügen eines Objekts in Glas, umfassend die Schritte:
• Bilden eines Hohlraums in Glasware während deren Herstellung.
• Eingießen von Polyol und Isocyanat jeweils in flüssigem Zustand in zwei separate Kammern eines Dosiersystems,
• Mischen von Polyol und Isocyanat, wodurch ein Füllstoff erhalten wird,
• Hinzufügen des Füllstoffs in den in der Glasware gebildeten Hohlraum, entsprechend dem Niveau, auf den das Objekt zu positionieren ist,
• Positionieren des Objekts auf den im vorangehenden Schritt in den Hohlraum der Glasware gefüllten Füllstoff, und
• Vollständiges Befüllen des Hohlraums mit Füllstoff nachdem das Objekt positioniert ist.
**dadurch gekennzeichnet, dass** das Objekt eine batteriebetriebene oder batterielose Lichtquelle ist.

2. Verfahren zum Einfügen eines Objekts in Glas nach Anspruch 1, **dadurch gekennzeichnet, dass** für eine verlangsamte Reaktion dem Gemisch ein Hemmstoff zugemischt wird, so dass das Objekt der beim Mischen von Polyol und isocyanat entstehenden Temperatur nicht ausgesetzt wird und somit sich nicht verformt.

3. Verfahren zum Einfügen eines Objekts in Glas nach Anspruch 1, **dadurch gekennzeichnet, dass** für eines besseres Anhaften des Füllstoffs am Glas auf die Glasoberfläche ein chemischer Klebstoff aufgetragen wird, so dass eine verbesserte Spülmaschinenfestigkeit der Glasware erzielt werden kann.

4. Verfahren zum Einfügen eines Objekts in Glas nach Anspruch 1, **dadurch gekennzeichnet, dass** zur Färbung des Füllstoffs Pigmente beigefügt werden.

5. Verfahren zum Einfügen eines Objekts in Glas, umfassend die Schritte:
• Bilden eines Hohlraums in Glasware während deren Herstellung,
• Einspeisen von Epoxidharz und Härtemittel jeweils in flüssigem Zustand in zwei separate Kammern eines Dosiersystems,
• Mischen von Epoxidharz und Härtemittel, wodurch ein Füllstoff erhalten wird,
• Hinzufügen des Füllstoffs in den in der Glasware gebildeten Hohlraum, entsprechend dem Niveau, auf den das Objekt zu positionieren ist,
• Positionieren des Objekts auf den im vorangehenden Schritt in den Hohlraum der Glasware gefüllten Füllstoff,
• Vollständiges Befüllen des Hohlraums mit nachdem das Objekt positioniert ist, und
• Ofentrocknen der mit dem Objekt versehenen Glasware,
**dadurch gekennzeichnet, dass** das Objekt eine batteriebetriebene oder batterielose Lichtquelle ist.

## Revendications

1. Procédé d'insertion d'un objet dans du verre, comprenant les étapes suivantes :
• former un espace dans la verrerie lors de la production de ladite verrerie,
• verser le polyol et l'isocyanate dans deux chambres différentes disposées dans le système de dosage à l'état liquide,
• mélanger le polyol et l'isocyanate, obtenir ainsi le filler
• ajouter le filler dans l'espace formé dans la verrerie en fonction du niveau auquel l'objet doit être positionné,
• positionner l'objet sur le fïller après avoir été rempli dans l'espace formé dans la verrerie, et
• une fois l'objet est positionné, remplir complètement l'espace avec le filler, **caractérisé en ce que** l'objet est une source lumineuse à piles ou sans piles.

2. Procédé d'insertion d'un objet dans du verre selon la Revendication 1, **caractérisé en ce qu'**un agent inhibiteur est ajouté dans le mélange pour ralentir la réaction de sorte que l'objet ne soit pas soumis à la température produite résultant du mélange du polyol et isocyanate, et ne sera donc pas déformé.

3. Procédé d'insertion d'un objet dans du verre selon la Revendication 1, **caractérisé en ce qu'**un adhésif chimique est appliqué sur la surface du verre afin d'augmenter la fixation du filler au verre de sorte que la résistance au lave-vaisselle de la verrerie soit améliorée.

4. Procédé d'insertion d'un objet dans du verre selon la Revendication 1, **caractérisé en ce que** des pigments sont ajoutés pour colorer le filler.

5. Procédé d'insertion d'un objet dans du verre, comprenant les étapes suivantes :
• former un espace dans la verrerie lors de la production de ladite verrerie,
• mettre de la résine époxy et de l'agent de durcissement dans deux chambres différentes disposées dans le système de dosage à l'état liquide,
• mélanger la résine époxy et l'agent de durcissement, obtenir ainsi le filler,
• ajouter le filler dans l'espace formé dans la verrerie en fonction du niveau auquel l'objet doit être positionné,
• positionner l'objet sur le filler ayant été rempli dans l'espace formé dans la verrerie
• une fois l'objet est positionné, remplir complètement l'espace avec le filler, et
• sécher au four la verrerie insérée dans l'objet, **caractérisé en ce que** l'objet est une source lumineuse à piles ou sans piles.
